# EUROPÄISCHE PATENTSCHRIFT

(11) **EP 2 588 264 B1**
(45) Veröffentlichungstag und Bekanntmachung des Hinweises auf die Patenterteilung: **30.03.2016**
(21) Anmeldenummer: 11796612.7
(22) Anmeldetag: 01.07.2011
(51) Int. Cl.: B22F 9/24, B22F 1/00

(54) **VERFAHREN ZUR HERSTELLUNG VON SILBER-NANODRÄHTEN**
PROCESS FOR PRODUCING SILVER NANOWIRES
PROCÉDÉ DE FABRICATION DE NANOFILS D'ARGENT

(30) Priorität: 02.07.2010 DE 102010017706
(43) Veröffentlichungstag der Anmeldung: 08.05.2013
(73) Patentinhaber: Rent-a-Scientist GmbH, 93059 Regensburg (DE)
(72) Erfinder: NUSKO, Robert, 93109 Wiesent (DE); MAIER, Georg, 93177 Altenthann (DE); KAISER, Theo, 93051 Regensburg (DE)
(74) Vertreter: Glück Kritzenberger Patentanwälte PartGmbB
(86) Internationale Anmeldenummer: PCT/DE2011/075155
(87) Internationale Veröffentlichungsnummer: WO 2012/022332

(56) Entgegenhaltungen:
- JP-A- 2009 120 867
- US-A1- 2009 196 788
- KYLEE E. KORTE ET AL: "Rapid synthesis of silver nanowires through a CuCl- or CuCl2-mediated polyol process", JOURNAL OF MATERIALS CHEMISTRY, Bd. 18, Nr. 4, 1. Januar 2008 (2008-01-01) , Seite 437, XP55010797, ISSN: 0959-9428, DOI: 10.1039/b714072j

## Beschreibung

### Technisches Gebiet

Die Erfindung betrifft ein Verfahren zur Herstellung von Silber-Nanodrähten.

### Stand der Technik

Die Herstellung von Silber-Nanodrähten ist aus dem Stand der Technik bekannt. Neben umfangreichen wissenschaftlichen Abhandlungen (z.B. "Approaches to the Synthesis and Characterization of Sherical and Anisotropic Noble Metal Nanomaterials" von H.J. Parab et.al. in "Metallic Nanomaterials" von Challa S.S.R. Kumar (ed.), WILEY-VCH Verlag, Weinheim) existiert auch einige Patentliteratur, die die Synthese von Silber-Nanodrähten offenbart. So beschreibt die US 2009/0282948 A1 ein Verfahren zur Herstellung von Silber-Nanodrähten mittels des seit langem bekannten Polyol-Prozesses, bei dem Hydroxylgruppen-haltige Chemikalien, insbesondere Ethylenglykol gleichzeitig als Lösungsmittel und als Reduktionsmittel eingesetzt werden. Ein ähnliches Verfahren wird in der WO 2009/128973 A2 offenbart. Ein Verfahren zur Herstellung von Silber-Nanodrähten in wässriger Umgebung mit Hydroxyketon bzw. Hydroxylamin als Reduktionsmittel wird in der US 2009/0311530 A1 beschrieben.

Im Rahmen der vorliegenden Schrift werden unter dem Begriff "Silber-Nanodraht" alle Materialien zusammengefasst, die
- überwiegend aus Partikeln mit Gehalten an metallischem Silber > 90 Gew.-% bestehen,
- eine "eindimensionale" Geometrie wie ein Stab bzw. ein Haar mit einer langen Achse (Länge) und einer kurzen Achse (Durchmesser) besitzen,
- ein Aspektverhältnis (Länge/Durchmesser) von mindestens 5 aufweisen und
- deren Durchmesser im Bereich zwischen 1 und 900 nm liegt.

Dem oben genannten Stand der Technik ist ein Syntheseweg zur Herstellung von Silber-Nanodrähten nach dem Polyol-Prozess zu entnehmen, bei dem neben einem heißen Polyol (bevorzugt Ethylenglykol) eine auf der Silberoberfläche adsorbierende organische Chemikalie (bevorzugt Polyvinylpyrrolidon - PVP), geringe Mengen eines Halogenids (bevorzugt Chlorid in Form von NaCl), geringe Mengen eines Fe(II)- oder Fe(III)-Salzes (bevorzugt Fe(III)-acetylacetonat) und ein Silbersalz (bevorzugt Ag(NO)₃) eingesetzt werden. Die Zugabe einer Säure (bevorzugt HCl oder HNO₃) wird in einigen Ausführungsbeispielen genannt. Die Reihenfolge der Zugabe der verschiedenen Chemikalien, Reaktionstemperaturen, Konzentrationen und Konzentrationsverhältnisse werden zum Teil unterschiedlich bzw. widersprüchlich angegeben.

Die in der US 2009/0282948 A1 angegebenen Beispiele zur Herstellung von Silber-Nanodrähten offenbaren relativ niedrige Silberkonzentrationen. Zur Herstellung von wirtschaftlich relevanten Mengen an Silber-Nanodrähten nach den dort angegebenen Verfahren sind große Reaktoren und große Mengen an Lösungsmittel (Ethylenglykol) erforderlich. Das Verfahren ist daher sehr aufwändig.

Aus K. E. Korte et al. (J. Mater. Chem., 2008, 18, 437-441) ist die Herstellung von Silbernanodrähten durch einen Polyol-Prozess bekannt. Als Redoxpaar ausbildende Chemikalie wird Kupfer in Form von CuCl oder CuCl₂ eingesetzt. Die wesentliche Erkenntnis der (1) ist, dass das Cu den O von den 111-Sites der Ag-Oberfläche entfernt und so das 1 D-Wachstum ermöglicht.

Die in der WO 2009/128973 A2 angegebenen Verfahren zur Herstellung von Silber-Nanodrähten arbeiten bei wirtschaftlich vernünftig hohen Silberkonzentrationen. Die Ausbeute an Silber-Nanodrähten bei Anwendung der in der WO 2009/128973 A2 beschriebenen Verfahren ist allerdings beschränkt auf maximal 65 % des eingesetzten Silbers. Da Silber ein wertvoller, begrenzt verfügbarer Rohstoff ist, spielt die Ausbeute bei der Herstellung eine wichtige Rolle für die Wirtschaftlichkeit eines Verfahrens.

Aus der US 2009/196788 A1 ist ein Verfahren zur Herstellung von Silber-Nanodrähten bekannt, bei dem zu einer Reaktionsmischung umfassend Ethylenglykol, Polyvinylpyrrolidon, NaCl und Fe(AcAc)₂ bei einer Temperatur der Reaktionsmischung von 130°C Silbernitrat in einer Menge zugegeben wird, dass die Konzentration an Silber in der Reaktionsmischung zumindest 0,5 Gew.-% bezogen auf das Gesamtgewicht der Reaktionsmischung beträgt.

Es besteht weiterhin ein Bedarf an Verfahren zur Herstellung von Silber-Nanodrähten, die die genannten Probleme überwinden. Insbesondere werden Verfahren benötigt, welche Silber-Nanodrähte mit hoher Ausbeute bei gleichzeitig hoher Reaktionskonzentration an Silber zugänglich machen.

### Darstellung der Erfindung

Hier setzt die Erfindung an. Der Erfindung, wie sie in den Ansprüchen gekennzeichnet ist, liegt die Aufgabe zugrunde, Verfahren zur Herstellung von Silber-Nanodrähten bereitzustellen, die bei einer hohen Reaktionskonzentration an Silber durchgeführt werden und die eine hohe Ausbeute an Silber-Nanodrähten liefern.

Diese Aufgabe wird erfindungsgemäß durch das Verfahren gemäß Anspruch 1 gelöst. Weitere vorteilhafte Details, Aspekte und Ausgestaltungen der vorliegenden Erfindung ergeben sich aus den abhängigen Ansprüchen, der Beschreibung, den Beispielen und der Figur.

Die vorliegende Erfindung stellt Verfahren zur Herstellung von Silber-Nanodrähten zur Verfügung. Das Verfahren umfasst die Schritte:
a) Bereitstellung einer Reaktionsmischung umfassend
   ein Polyol,
   eine auf einer Silberoberfläche adsorbierende organische Chemikalie,
   eine ein Halogenid und/oder eine ein Pseudohalogenid bildende Chemikalie, wobei es sich bei der ein Halogenid bildenden Chemikalie um ein Salz des Halogenids Cl⁻ handelt und wobei es sich bei der ein Pseudohalogenid bildende Chemikalie um ein Salz eines der Pseudohalogenide SCN⁻, CN⁻, OCN- und/oder CNO- handelt,
   eine ein Redoxpaar ausbildende Chemikalie ausgewählt aus der Gruppe bestehend aus Brom, lod, Vanadium und deren Gemischen,
b) Zugabe eines Silbersalzes in einer Menge, dass die Konzentration an Silber in der Reaktionsmischung zumindest 0,5 Gew.-% bezogen auf das Gesamtgewicht der Reaktionsmischung beträgt, wobei die Zugabe des Silbersalzes bei einer Temperatur der Reaktionsmischung von zumindest 100°C erfolgt,
c) Beibehalten einer Temperatur der Reaktionsmischung von zumindest 100°C für die Dauer der Reaktion.

Bei den erfindungsgemäßen Verfahren zur Herstellung von Silber-Nanodrähten handelt es sich um eine Polyolsynthese, bei denen ein Silbersalz im heißen Polyol unter Anwesenheit einer auf der Silberoberfläche adsorbierenden organischen Chemikalie, einer ein Halogenid und/oder einer ein Pseudohalogenid bildende Chemikalie sowie einer ein Redoxpaar ausbildenden Chemikalie ausgewählt aus der Gruppe Brom, lod, Vanadium und deren Gemischen zu metallischem Silber in Form von Nanodrähten reduziert wird.

Das erfindungsgemäße Verfahren ermöglicht die Herstellung von Silber-Nanodrähten in hoher Ausbeute von 80% und mehr bei gleichzeitig hoher Reaktionskonzentration an Silber von zumindest 0,5 Gew.-% bezogen auf das Gesamtgewicht der Reaktionsmischung.

Das Ende der Reaktion kann vom Fachmann ohne Probleme bestimmt werden, da zum einen die Bildung der Silber-Nanodrähte visuell gut verfolgt werden kann und zum anderen die während der Reaktion auftretende Gasentwicklung zum Erliegen kommt. Am Ende der Reaktion liegt eine perlmutfarbene, schillernde Dispersion vor.

Es soll darauf hingewiesen werden, dass die Definition der Reaktionsmischungsbestandteile "eine ein Halogenid und/oder eine ein Pseudohalogenid bildende Chemikalie" und "Redoxpaar ausbildende Chemikalie ausgewählt aus der Gruppe bestehend aus Brom, lod, Vanadium und deren Gemischen" überlappen. Wie die nachfolgend näher erläuterten experimentellen Ergebnisse zeigen, sind Verbindungen wie beispielsweise VCl₃ tatsächlich dazu geeignet, die Aufgaben der beiden Bestandteile der Reaktionsmischung zu übernehmen. Die nachfolgend angegebenen bevorzugten Konzentrationsbereiche der beiden genannten Reaktionsmischungsbestandteile sind in diesen Fällen additiv zu verstehen, d.h. beispielsweise VCl₃ wird in einer Menge zugegeben, die beide Konzentrationsbereiche erfüllt.

Daneben soll auch noch angemerkt werden, dass die in den Ansprüchen gebrauchten Begriffe "ein" und "eine" nicht als Zahlwörter sondern als unbestimmte Artikel zu verstehen sind. So ist beispielsweise der Ausdruck "ein Polyol" in der Bedeutung "ein oder mehrere Polyole" gemeint.

Gemäß einer bevorzugten Ausführungsform erfolgt die Zugabe des Silbersalzes in einer Menge, dass die Konzentration an Silber in der Reaktionsmischung zumindest 1,0 Gew.-%, bevorzugt zumindest 2,5 Gew.-%, besonders bevorzugt zumindest 5,0 Gew.-% bezogen auf das Gesamtgewicht der Reaktionsmischung beträgt. Mit zunehmender Konzentration an Silber in der Reaktionsmischung steigt bei gleich bleibender Ausbeute die Menge an Silber-Nanodrähten, die in einem Arbeitsgang hergestellt werden.

Zusätzlich oder alternativ ist gemäß einer bevorzugten Ausführungsform die das Halogenid und/oder die das Pseudohalogenid bildende Chemikalie in einer Menge in der Reaktionsmischung enthalten, dass die Konzentration des Halogenids und/oder des Pseudohalogenids in der Reaktionsmischung in einem Bereich von 5 ppm bis 2000 ppm, bevorzugt in einem Bereich von 20 ppm bis 1000 ppm, besonders bevorzugt in einem Bereich von 50 ppm bis 500 ppm liegt.

Gemäß einer bevorzugten Ausführungsform handelt es sich zusätzlich oder alternativ bei der das Halogenid bildenden Chemikalie um NaCl und/oder KCl. Gemäß einer weiteren bevorzugten Ausführungsform handelt es sich bei der das Halogenid bildenden Chemikalie um elementares Brom und/oder um elementares Iod.

Gemäß einer bevorzugten Ausführungsform handelt es sich zusätzlich oder alternativ bei der das Pseudohalogenid bildenden Chemikalie um NaSCN und/oder KSCN.

Gemäß einer bevorzugten Ausführungsform enthält die in Schritt a) bereitgestellte Reaktionsmischung zusätzlich ein Eisensalz, wobei das Eisensalz in der Reaktionsmischung ein Fe(II)/Fe(III) - Redoxpaar ausbildet. Das zugegebene Eisensalz ist also dazu geeignet, unter den Reaktionsbedingungen des erfindungsgemäßen Verfahrens ein Fe(II)/Fe(III) - Redoxpaar auszubilden.

Gemäß einer bevorzugten Ausführungsform enthält die in Schritt a) bereitgestellte Reaktionsmischung zusätzlich ein Kupfersalz, wobei das Kupfersalz in der Reaktionsmischung ein Redoxpaar ausbildet. Das zugegebene Kupfersalz ist also dazu geeignet, unter den Reaktionsbedingungen des erfindungsgemäßen Verfahrens ein Redoxpaar auszubilden.

Gemäß einer bevorzugten Ausführungsform handelt es sich zusätzlich oder alternativ bei der ein Redoxpaar ausbildenden Chemikalie um elementares Vanadium, ein Vanadiumoxid, ein Vanadiumhydroxid, ein Vanadiumsulfat, ein Vanadiumnitrat, ein Vanadiumchlorid oder um ein Gemisch dieser Verbindungen.

Gemäß einer bevorzugten Ausführungsform handelt es sich zusätzlich oder alternativ bei dem Redoxpaar um B⁻/Br₂/BrO₃⁻, I⁻/I₂/IO₃⁻ und/oder V(0)/V(II)/V(III)IV(IV)N(V).

Gemäß einer bevorzugten Ausführungsform liegt zusätzlich oder alternativ die Konzentration der ein Redoxpaar ausbildenden Chemikalie in der Reaktionsmischung in einem Bereich von 5 ppm bis 2000 ppm, bevorzugt in einem Bereich von 20 ppm bis 1000 ppm, besonders bevorzugt in einem Bereich von 50 ppm bis 500 ppm.

Gemäß einer bevorzugten Ausführungsform enthält die in Schritt a) bereitgestellte Reaktionsmischung zusätzlich zumindest eine anorganische oder organische Säure. Gemäß einer bevorzugten Ausführungsform handelt es sich zusätzlich oder alternativ bei der Säure um HCl, HBr, Hl und/oder HNO₃.

Zusätzlich oder alternativ erfolgt gemäß einer bevorzugten Ausführungsform die Zugabe der Säure in einer Menge, dass die Konzentration an Säure in der Reaktionsmischung in einem Bereich von 0,01 Gew.-% bis 2,0 Gew.-%, bevorzugt in einem Bereich von 0,02 Gew.-% bis 1,0 Gew.-%, besonders bevorzugt in einem Bereich von 0,05 Gew.-% bis 0,5 Gew.-% bezogen auf das Gesamtgewicht der Reaktionsmischung beträgt.

Zusätzlich oder alternativ erfolgt gemäß einer bevorzugten Ausführungsform die Zugabe des Silbersalzes bei einer Temperatur der Reaktionsmischung von zumindest 145°C, bevorzugt bei einer Temperatur der Reaktionsmischung zwischen 145°C und 200°C, besonders bevorzugt bei einer Temperatur der Reaktionsmischung zwischen 150°C und 180°C, insbesondere bevorzugt bei einer Temperatur der Reaktionsmischung zwischen 155°C und 170°C.

Zusätzlich oder alternativ wird gemäß einer bevorzugten Ausführungsform in Schritt c) für die Dauer der Reaktion eine Temperatur der Reaktionsmischung von zumindest 145°C, bevorzugt eine Temperatur der Reaktionsmischung zwischen 145°C und 200°C, besonders bevorzugt eine Temperatur der Reaktionsmischung zwischen 150°C und 180°C, insbesondere bevorzugt eine Temperatur der Reaktionsmischung zwischen 155°C und 170°C beibehalten.

Gemäß einer weiteren bevorzugten Ausführungsform wird nach Schritt c) der Schritt d) Isolieren der Silber-Nanodrähte aus der Reaktionsmischung durchgeführt, wobei zum Isolieren der Silber-Nanodrähte aus der Reaktionsmischung bevorzugt ein geeignetes Lösungsmittel zugegeben wird und anschließend ein Abdekantieren des Überstandes erfolgt. Insbesondere bevorzugt werden die Lösungsmittel entionisiertes Wasser, Ethanol oder Isopropanol zugegeben.

Gemäß einer weiteren bevorzugten Ausführungsform wird nach Schritt c) und vor Schritt d) der Schritt c₁) Abkühlen der Reaktionsmischung durchgeführt, wobei bevorzugt ein Abkühlen der Reaktionsmischung auf Raumtemperatur erfolgt.

Bei Durchführung des Verfahrens zur Herstellung von Silber-Nanodrähten unter den Bedingungen der oben genannten bevorzugten Ausführungsformen wird eine besonders hohe Ausbeute an Silber-Nanodrähten erzielt. Eine Kombination verschiedener bevorzugter Ausführungsformen bewirkt eine weitere Erhöhung der Ausbeute.

Die offenbarten Verfahren basieren auf dem Polyol-Prozess. Das bedeutet, dass als Lösungsmittel und Reduktionsmittel Verbindungen mit mehreren Hydroxylgruppen eingesetzt werden. Grundsätzlich können alle Polyole eingesetzt werden, die in der Lage sind, die eingesetzte Silber-Verbindung zu elementarem Silber zu reduzierten. Es kann ein einziges Polyol in der Reaktionsmischung verwendet werden oder eine Mischung von zwei, drei, vier, fünf oder mehr Polyolen. Die Polyole können zwei, drei, vier, fünf oder mehr Hydroxylgruppen und daneben Heteroatome wie beispielsweise Sauerstoff oder Stickstoff aufweisen. Diese Heteroatome können in Form einer Ether-, Ester-, Amin- und/oder Amid-Funktion anwesend sein. Bei dem Polyol kann es sich also um ein Polyesterpolyol, ein Polyetherpolyol oder eine ähnliche Verbindung handeln.

Das Polyol kann entweder ein aliphatisches Glykol oder ein entsprechender Glykolpolyester sein. Als aliphatische Glykole kommen insbesondere Alkylenglykole mit bis zu 6 Kohlenstoffatomen in der Hauptkette in Frage. Beispiele für solche Verbindungen sind Ethandiol, ein Propandiol, ein Butandiol, ein Pentandiol oder ein Hexandiol wie auch Polyalkylenglykol-Derivate dieser Alkylenglykole.

Das Polyol kann beispielsweise zwei, drei, vier, fünf oder sechs Hydroxylgruppen und zwei, drei, vier, fünf, sechs, sieben, acht, neun, zehn, elf oder zwölf Kohlenstoffatome umfassen. Bei dem (Alkylen-) Polyol kann es sich um ein Glykol, also um eine Verbindung mit Hydroxylgruppen an benachbarten (aliphatischen oder cycloaliphatischen) Kohlenstoffatomen handeln. Die Glykole können beispielsweise zwei, drei, vier, fünf oder sechs Kohlenstoffatome aufweisen. Bevorzugte Polyole sind Glycerol, Trimethylolpropan, Pentaerythritol, Triethanolamin und Trihydroxymethylaminomethan.

Ebenfalls bevorzugt sind die Polyole Ethylenglykol, Diethylenglykol, Triethylenglykol, Propylenglykole, Butandiole, Dipropylenglykole und ein bei der Reaktionstemperatur flüssiges Polyethylenglykol wie beispielsweise Polyethylenglykol 300. Besonders bevorzugte Polyole sind Tetraethylenglykol, 1,2-Propandiol, Dipropylenglykol, 1,2-Butandiol, 1,3-Butandiol, 1,4-Butandiol und 2,3-Butandiol.

Die genannten Glykole weisen ein hohes Reduktionsvermögen, einen Siedepunkt zwischen 185°C und 328°C, eine gute thermische Stabilität und niedrige Beschaffungskosten auf.

Eine weitere zur Verwendung in Verfahren gemäß der vorliegenden Erfindung geeignete Gruppe von Polyolen umfasst: Ethylenglykol, Glycerol, Glucose, Diethylenglykol, Triethylenglykol, Propylenglykole, Butandiol, Dipropylenglykol und Polyethylenglykole.

Daneben können auch andere Polyole wie zum Beispiel Zucker und Alkohole alleine oder in Form von Mischungen zumindest einen Teil des Polyol-Reaktanden bilden. In der Regel werden Polyole verwendet, die bei Raumtemperatur und bei der entsprechenden Reaktionstemperatur flüssig sind, was aber nicht zwingend erforderlich ist. So können beispielsweise Polyole eingesetzt werden, die bei Raumtemperatur fest oder halbfest sind.

Gemäß einer besonders bevorzugten Ausführungsform der vorliegenden Erfindung werden zusätzlich Lösungsmittel aus der Gruppe der polaren protischen Lösungsmittel wie z,B, Wasser, Alkohole und Aldehyde sowie deren Mischungen eingesetzt.

Des weiteren sind zur Herstellung der erfindungsgemäßen Nanodrähte besonders zusätzliche Reduktionsmittel zum Polyol aus der Gruppe der Alkohole, Aldehyde, Ketone, Amine sowie Tartrate, Citrate, Hydride, Hydrazin und seine Verbindungen geeignet. Aus technischen und wirtschaftlichen Gründen wird der Einsatz von Ethylenglykol (Ethan-1,2-diol) und/oder Glycerin (Propan-1,2,3-triol) bevorzugt. Die in dieser Schrift angegebenen Beispiele sind alle in Ethylenglykol ausgeführt. Orientierende Versuche haben gezeigt, dass das Ethylenglykol ohne nennenswerte Anpassung der Reaktionsbedingungen durch Glycerin bzw. Mischungen von Ethylenglykol und Glycerin ersetzt werden kann. Die Eignung anderer, z.B. in der WO 2009/128973 A2 angegebener Polyole zur Verwendung in den erfindungsgemäßen Verfahren soll explizit nicht ausgeschlossen werden.

Das Silbersalz stellt die zur Reduktion erforderlichen Silberionen bereit. Geeignete Salze sind alle, die die Silberionen unter den Reaktionsbedingungen ausreichend schnell zur Verfügung stellen, so dass die durch die Reaktionsführung vorgegebene Reaktionskinetik im wesentlichen nicht beeinflusst wird. Bevorzugtes Silbersalz ist aufgrund der guten kommerziellen Verfügbarkeit AgNO₃. Das Silbersalz kann der Reaktion in Form einer Lösung oder direkt als Feststoff zugesetzt werden. Als Lösungsmittel für das Silbersalz eignet sich u.a. das bei der Reaktion eingesetzte Polyol, also bevorzugt Ethylenglykol und/oder Glycerin. Die Zugabe kann auf einmal, portionsweise oder kontinuierlich über einen längeren Zeitraum erfolgen. Die Silbersalzzugabe erfolgt bei Reaktionstemperatur. Die Silbersalzzugabe erfolgt in einer Menge, die rechnerisch einer Silberkonzentration von mindestens 0,5 Gew.-% in der Reaktionsmischung entspricht. In bevorzugten Ausführungsformen der Erfindung liegt Silber in einer Konzentration von mindestens 1,0 Gew.-%, mehr bevorzugt von mindestens 2,5 Gew.-%, am meisten bevorzugt von mindestens 5,0 Gew.-% vor.

Die auf der Silberoberfläche adsorbierende organische Chemikalie ist zur Ausbildung der gewünschten drahtförmigen Morphologie im Polyolprozess erforderlich. Die wissenschaftliche Literatur beschäftigt sich seit den frühen 1990er Jahren mit diesem Phänomen. Unterschiedliche Mechanismen und verschiedene Aufgaben wurden diesen Chemikalien in der Vergangenheit zugewiesen. U.a. sollen sie die Agglomeration der gebildeten Nanopartikel verhindern bzw. die gebildeten Metallgitterflächen spezifisch belegen.

Solche auf der Silberoberfläche adsorbierenden organischen Chemikalien sind beispielsweise aus der WO 2009/128973 A2 bekannt.

Bei der auf der Silberoberfläche adsorbierenden organischen Chemikalie kann es sich um eine Flüssigkeit handeln. In solchen Fällen kann die Chemikalie direkt mit anderen Reaktanden gemischt werden oder sie kann durch Mischen mit einem Lösungsmittel oder einem Gemisch aus Lösungsmitteln, worin ein Polyol enthalten sein kann, zuerst verdünnt werden. Die auf der Silberoberfläche adsorbierende organische Chemikalie kann auch fest sein und wird dann zuerst in einem Lösungsmittel gelöst, bevor sie mit den anderen Reaktanden gemischt wird. Es ist nicht entscheidend, dass sich die auf der Silberoberfläche adsorbierende organische Chemikalie vollständig in dem Lösungsmittel löst, es kann auch eine Suspension der auf der Silberoberfläche adsorbierenden organischen Chemikalie verwendet werden.

Bei dem Lösungsmittel kann es sich um ein Polyol oder ein Gemisch aus einem Polyol und ein oder mehreren anderen Lösungsmitteln handeln. Das eine oder die mehreren anderen Lösungsmittel können so gewählt werden, dass sie die auf der Silberoberfläche adsorbierende organische Chemikalie entweder allein oder als Gemisch lösen. Bei dem Lösungsmittel existiert keine besondere Einschränkung, solange es nicht die lösungsvermittelte Herstellung gewünschter Nanostrukturen, wie z.B. Silber-Nanodrähte, behindert oder verhindert.

Es ist keine Voraussetzung, dass die auf der Silberoberfläche adsorbierende organische Chemikalie der Reaktion in Lösung zugegeben wird, da sie in fester Form (einem festen Pulver) zugegeben werden kann. Es ist aber möglich, dass sich die auf der Silberoberfläche adsorbierende organische Chemikalie nicht immer völlig oder überwiegend löst, so dass die resultierende Lösung genauer als Suspension denn als Lösung bezeichnet werden sollte.

Die auf der Silberoberfläche adsorbierende organische Chemikalie wird gewöhnlich so gewählt, dass sie selbst bei der Reaktionstemperatur nicht in irgendeinem wesentlichen Ausmaß mit dem Polyol oder irgendeinem anderen Lösungsmittel reagiert. Jedes zum Lösen der auf der Silberoberfläche adsorbierenden organischen Chemikalie verwendete Lösungsmittel sollte ebenfalls so gewählt werden, dass es die lösungsvermittelte Herstellung gewünschter Nanostrukturen, wie z.B. Silber-Nanodrähte, nicht behindert oder verhindert. Falls das Reaktionsgemisch bei der Reaktionstemperatur kein anderes Lösungsmittel für die auf der Silberoberfläche adsorbierende organische Chemikalie umfasst, sollte sich auch die auf der Silberoberfläche adsorbierende organische Chemikalie zumindest bis zu einem gewissen Grad in dem Polyol lösen. Die auf der Silberoberfläche adsorbierende organische Chemikalie kann zum Beispiel eine Löslichkeit bei Raumtemperatur von zumindest etwa 1 g pro Liter Lösungsmittel (wobei Lösungsmittelgemische umfasst sind), z.B. zumindest etwa 5 g pro Liter Lösungsmittel, zumindest etwa 10 g pro Liter Lösungsmittel oder zumindest etwa 20 g pro Liter Lösungsmittel aufweisen. In einigen Ausführungsformen weist die auf der Silberoberfläche adsorbierende organische Chemikalie eine Löslichkeit von zumindest etwa 100 g pro Liter Lösungsmittel, z.B. zumindest etwa 200 g pro Liter Lösungsmittel oder zumindest etwa 300 g pro Liter Lösungsmittel auf.

Die Lösungen der auf der Silberoberfläche adsorbierenden organischen Chemikalie können in jeder Konzentration hergestellt werden, die machbar ist und in der die gewünschten Nanostrukturen, wie z.B. Silber-Nanodrähte, hergestellt werden können.

Es versteht sich, dass, wenn z.B. ein Polymer wie Polyvinylpyrrolidon (PVP) mit einem mittleren Molekulargewicht von z.B. 55.000 als die auf der Silberoberfläche adsorbierende organische Chemikalie verwendet wird, die Konzentration unter Verwendung des Monomergewichts und nicht des mittleren Molekulargewichts des Polymers berechnet wird. Die molare Konzentration von PVP-Lösung würde z.B. berechnet werden, indem man die zur Herstellung eines Liters der OPA-Lösung verwendeten Gramm PVP durch 111 g/mol und nicht durch 55.000 g/mol dividiert.

Die vorliegende Erfindung umfasst auch die gemeinsame Verwendung von zwei oder mehr unterschiedlichen auf der Silberoberfläche adsorbierenden organischen Chemikalien. Zum Beispiel kann ein Gemisch aus zwei oder mehr unterschiedlichen niedrig molekulargewichtigen Verbindungen oder ein Gemisch aus zwei oder mehr der gleichen oder verschiedener Polymere verwendet werden, wobei die Polymere, falls es gleiche sind, von unterschiedlichem Molekulargewicht sind. In einigen Ausführungsformen kann ein Gemisch aus ein oder mehr Verbindungen mit niedrigem Molekulargewicht und ein oder mehr Polymeren verwendet werden. Die auf der Silberoberfläche adsorbierende organische Chemikalie kann z.B. ein Gemisch aus Polymeren mit einem ähnlichen Molekulargewicht (z.B. Polyvinylpyrrolidon mit einem ungefähren Molekulargewicht von 55.000) sein. In einigen Ausführungsformen kann es sich bei der auf der Silberoberfläche adsorbierenden organischen Chemikalie um ein Gemisch handeln, das eins oder mehr dieser marktüblichen Polymergemische umfasst. Die auf der Silberoberfläche adsorbierende organische Chemikalie kann z.B. Polyvinylpyrrolidon mit einem mittleren Molekulargewicht von 55.000 und Polyvinylpyrrolidon mit einem mittleren Molekulargewicht von 1.300.000 umfassen. In einigen Ausführungsformen kann die auf der Silberoberfläche adsorbierende organische Chemikalie ein Gemisch aus unterschiedlichen Polymeren umfassen. Die auf der Silberoberfläche adsorbierende organische Chemikalie kann z.B. Polyvinylpyrrolidon mit einem mittleren Molekulargewicht von 55.000 und Polyvinylalkohol mit einem mittleren Molekulargewicht von 35.000 umfassen.

In einigen Ausführungsformen ist die auf der Silberoberfläche adsorbierende organische Chemikalie eine Substanz, die im Stande ist, elektronisch mit einem Metallatom eines Nanopartikels zu interagieren. Eine solche Substanz kann ein oder mehr Atome (z.B. zumindest zwei Atome) mit ein oder mehr freien Elektronenpaaren, wie z.B. Sauerstoff, Stickstoff und Schwefel, umfassen. Als nicht limitierendes Beispiel kann die auf der Silberoberfläche adsorbierende organische Chemikalie zu einer koordinativen Interaktion mit einem Metallatom auf der Oberfläche eines Nanopartikels und/oder zum Chelatieren des Metallatoms im Stande sein. Die auf der Silberoberfläche adsorbierenden organischen Chemikalien können z.B. ein oder zwei O- und/oder N-Atome umfassen. Die Atome mit einem freien Elektronenpaar können in Form einer funktionellen Gruppe, wie z.B. einer Hydroxygruppe, einer Carbonylgruppe, einer Ethergruppe und einer Aminogruppe, oder als eine Komponente einer funktionellen Gruppe, die eine oder mehr dieser Gruppen als ihr Strukturelement umfasst, in der Substanz gegenwärtig sein. Nicht limitierende Beispiele für geeignete funktionelle Gruppen umfassen -COO-, -O-CO-O-, -CO-O-CO-, -C-O-C-, -CONR-, -NR-CO-O-, -NR¹-CO-NR²-, -CO-NR-CO-, - SO₂NR- und -SO₂-O-, wobei R, R¹ und R² jeweils unabhängig Wasserstoff oder ein organisches Radikal (z.B. ein aliphatisches oder aromatisches, unsubstituiertes oder substituiertes Radikal, das von etwa 1 bis etwa 20 Kohlenstoffatome umfasst) repräsentieren. Solche funktionellen Gruppen können die obigen (und andere) Strukturelemente als Teil einer cyclischen Struktur (z.B. in Form eines cyclischen Esters, Amids, Anhydrids, Imids, Carbonats, Urethans, Harnstoffs u. Ä.) umfassen. In einigen Ausführungsformen ist oder umfasst die auf der Silberoberfläche adsorbierende organische Chemikalie eine Substanz, die im Stande ist, die Metallverbindung zu reduzieren. Ein spezifisches, nicht limitierendes Beispiel für eine solche Substanz ist Polyvinylpyrrolidon (PVP).

In einigen Ausführungsformen kann die auf der Silberoberfläche adsorbierende organische Chemikalie insgesamt zumindest etwa 10 Atome pro Molekül aufweisen, die aus C, N und O gewählt werden - z.B. zumindest etwa 20 solcher Atome oder zumindest etwa 50 solcher Atome. In einigen Ausführungsformen die auf der Silberoberfläche adsorbierende organische Chemikalie insgesamt zumindest etwa 100 C-, N- und O-Atome pro Molekül auf: z.B. zumindest etwa 200, zumindest etwa 300 oder zumindest etwa 400 C-, N- und O-Atome pro Molekül. Im Fall von Polymeren beziehen sich diese Zahlen auf den Durchschnitt pro Polymermolekül.

Die auf der Silberoberfläche adsorbierende organische Chemikalie kann eine organische Verbindung mit niedrigem Molekulargewicht, nicht höher als etwa 500, umfassen. In einigen Ausführungsformen kann das organische Schutzmittel ein Molekulargewicht von nicht höher als etwa 300 aufweisen. In einigen Ausführungsformen kann die auf der Silberoberfläche adsorbierende organische Chemikalie eine oligomere oder polymere Verbindung umfassen. Als nicht limitierendes Beispiel ist Polyvinylpyrrolidon mit einem mittleren Molekulargewicht in dem Bereich von etwa 10.000 bis etwa 1.300.000 für eine Herstellung von Silber-Nanodrähten besonders nützlich. In einigen Ausführungsformen wird Polyvinylpyrrolidon mit einem mittleren Molekulargewicht von 55.000 gewählt.

Einige nicht limitierende Beispiele für auf der Silberoberfläche adsorbierende organische Chemikalien, die allein oder als Gemische verwendet werden können, umfassen Polyvinylpyrrolidon, Polyvinylalkohol und Tenside, wie z.B. Natriumdodecylsulfat (SDS - von englisch: Sodium Dodecyl Sulfate), Laurylamin und Hydroxypropylcellulose.

Einige nicht limitierende Beispiele für eine auf der Silberoberfläche adsorbierende organische Chemikalie mit niedrigem Molekulargewicht umfassen Fettsäuren, insbesondere Fettsäuren mit zumindest etwa 8 Kohlenstoffatomen. Nicht limitierende Beispiele für Oligomere/Polymere zur Verwendung als auf der Silberoberfläche adsorbierende organische Chemikalie umfassen Homo- und Copolymere (wobei Polymere wie z.B. statistische Copolymere, Blockcopolymere und Pfropfcopolymere umfasst werden), die Einheiten von zumindest einem Monomer umfassen, welches ein oder mehr O-Atome und/oder ein oder mehr N-Atome umfasst. Eine nicht limitierende Klasse solcher Polymere für eine Verwendung in der vorliegenden Erfindung bilden Polymere, die zumindest eine Monomereinheit umfassen, welche zumindest zwei Atome umfasst, die aus O- und N-Atomen gewählt sind. Entsprechende Monomereinheiten können zum Beispiel zumindest eine Hydroxylgruppe, Carbonylgruppe, Etherbindungs- und/oder Aminogruppe und/oder ein oder mehr Strukturelemente der Formel: -COO-, -O-CO-O-, -CO-O-CO-, -C-O-C-, -CONR-, -NR-CO-O-, -NR¹-CO-NR²-, -CO-NR-CO-, - SO₂NR- und -SO₂-O- umfassen, wobei R, R¹ und R² jeweils unabhängig Wasserstoff oder ein organisches Radikal (z.B. ein aliphatisches oder aromatisches, unsubstituiertes oder substituiertes Radikal, das von etwa 1 bis etwa 20 Kohlenstoffatome umfasst) repräsentieren.

Einige nicht limitierende Beispiele für entsprechende Polymere, die als die auf der Silberoberfläche adsorbierende organische Chemikalie fungieren können, umfassen Polymere, die eine oder mehr aus den folgenden Monomergruppen abgeleitete Einheiten umfassen:
(a) monoethylenisch ungesättigte Carbonsäuren aus von etwa 3 bis etwa 8 Kohlenstoffatomen und deren Salze. Diese Gruppe von Monomeren umfasst z.B. Acrylsäure, Methacrylsäure, Dimethylacrylsäure, Ethacrylsäure, Maleinsäure, Citraconsäure, Methylenmalonsäure, Allylessigsäure, Vinylessigsäure, Crotonsäure, Fumarsäure, Mesaconsäure und Itaconsäure. Die Monomere aus Gruppe (a) können entweder in Form der freien Carbonsäuren oder in zum Teil oder völlig neutralisierter Form verwendet werden. Für die Neutralisation können z.B. Alkalimetallbasen, Erdalkalimetallbasen, Ammoniak oder Amine, z.B. Natriumhydroxid, Kaliumhydroxid, Natriumcarbonat, Kaliumcarbonat, Natriumhydrogencarbonat, Magnesiumoxid, Calciumhydroxid, Calciumoxid, Ammoniak, Triethylamin, Methanolamin, Diethanolamin, Triethanolamin, Morpholin, Diethylentriamin oder Tetraethylenpentamin verwendet werden;
(b) die Ester, Amide, Anhydride und Nitrile der unter (a) aufgeführten Carbonsäuren, wie z.B. Methylacrylat, Ethylacrylat, Methylmethacrylat, Ethylmethacrylat, n-Butylacrylat, Hydroxyethylacrylat, 2- oder 3-Hydroxypropylacrylat, 2- oder 4-Hydroxybutylacrylat, Hydroxyethylmethacrylat, 2- oder 3-Hydroxypropylmethacrylat, Hydroxyisobutylacrylat, Hydroxyisobutylmethacrylat, Monomethylmaleat, Dimethylmaleat, Monoethylmaleat, Diethylmaleat, Maleinanhydrid, 2-Ethylhexylacrylat, 2-Ethylhexylmethacrylat, Acrylamid, Methacrylamid; N,N-Dimethylacrylamid, N-tert-Butylacrylamid, Acrylnitril, Methacrylnitril, 2-Dimethylaminoethylacrylat, 2-Dimethylaminoethylmethacrylat, 2-Diethylaminoethylacrylat, 2-Diethylaminoethylmethacrylat und die Salze der zuletzt erwähnten Monomere mit Carbonsäuren oder Mineralsäuren;
(c) Acrylamidoglycolsäure, Vinylsulfonsäure, Allylsulfonsäure, Methallylsulfonsäure, Styrolsulfonsäure, 3-Sulfopropylacrylat, 3-Sulfopropylmethacrylat und Acrylamidomethylpropansulfonsäure und Monomere umfassend Phosphonsäuregruppen, wie z.B. Vinylphosphat, Allylphosphat und Acrylamidomethylpropanphosphonsäure; und Ester, Amide und Anhydride dieser Säuren;
(d) N-Vinyllactame, wie z.B. N-Vinylpyrrolidon, N-Vinyl-2-piperidon und N-Vinylcaprolactam;
(e) Vinylacetal, Vinylbutyral, Vinylalkohol und Ether und Ester davon (wie z.B. Vinylacetat, Vinylpropionat und Methylvinylether), Allylalkohol und Ether und Ester davon, N-Vinylimidazol, N-Vinyl-2-methylimidazolin und die Hydroxystyrole.

Entsprechende Polymere können auch zusätzliche Monomereinheiten enthalten, z.B. von Monomeren ohne funktionelle Gruppe abgeleitete Einheiten, halogenierte Monomere, aromatische Monomere etc. Nicht limitierende Beispiele für solche Monomere umfassen Olefine, wie z.B. Ethylen, Propylen, die Butene, Pentene, Hexene, Octene, Decene und Dodecene, Styrol, Vinylchlorid, Vinylidenchlorid, Tetrafluorethylen etc. Darüber hinaus sind die Polymere zur Verwendung als auf der Silberoberfläche adsorbierende organische Chemikalie in dem Verfahren der vorliegenden Erfindung nicht auf Additionspolymere beschränkt, sondern umfassen auch andere Arten von Polymeren, z.B. Kondensationspolymere, wie z.B. Polyester, Polyamide, Polyurethane und Polyether, ebenso wie Polysaccharide, wie z.B. Stärke, Cellulose und deren Derivate etc.

In einigen Ausführungsformen umfassen Polymere für eine Verwendung in der vorliegenden Erfindung Polymere, die Monomereinheiten aus ein oder mehr unsubstituierten oder substituierten N-Vinyllactamen umfassen, wie z.B. diejenigen mit von etwa 4 bis etwa 8 Ringgliedern, z.B. N-Vinylcaprolactam, N-Vinyl-2-piperidon und N-Vinylpyrrolidon. Diese Polymere umfassen Homo- und Copolymere. Im Fall von Copolymeren (die z.B. statistische, Block- und Pfropfcopolymere umfassen) können die N-Vinyllactam - (z.B. N-Vinylpyrrolidon) -Einheiten in einer Menge von zumindest etwa 10 Mol-%, z.B. zumindest etwa 30 Mol-%, zumindest etwa 50 Mol-%, zumindest etwa 70 Mol-%, zumindest etwa 80 Mol-% oder zumindest etwa 90 Mol-% gegenwärtig sein. Als nicht limitierendes Beispiel können die Comonomere ein oder mehr der in den vorangegangenen Absätze genannten umfassen, wobei Monomere ohne funktionelle Gruppe (z.B. Ethylen, Propylen, Styrol etc), halogenierte Monomere etc. umfasst werden.

Falls die Vinyllactam - (z.B. Vinylpyrrolidon) -Monomere (oder zumindest ein Teil davon) einen oder mehr Substituenten in dem heterocyclischen Ring tragen, können nicht limitierende Beispiele für solche Substituenten umfassen: Alkylgruppen (z.B. Alkylgruppen mit von 1 bis etwa 12 Kohlenstoffatomen, z.B. von 1 bis etwa 6 Kohlenstoffatomen, wie z.B. Methyl, Ethyl, Propyl und Butyl), Alkoxygruppen (z.B. Alkoxygruppen mit von 1 bis etwa 12 Kohlenstoffatomen, z.B. von 1 bis etwa 6 Kohlenstoffatomen, wie z.B. Methoxy, Ethoxy, Propoxy und Butoxy), Halogenatome (z.B. F, Cl und Br), Hydroxy-, Carboxy- und Aminogruppen (z.B. Dialkylaminogruppen, wie z.B. Dimethylamino und Diethylamino) und jegliche Kombinationen dieser Substituenten.

Nicht limitierende spezifische Beispiele für Vinyllactampolymere zur Verwendung in der vorliegenden Erfindung umfassen Homo- und Copolymere von Vinyllpyrrolidon. Insbesondere können diese Polymere umfassen:
(a) Vinylpyrrolidon-Homopolymere, wie z.B. Klassen K-15 und K-30 mit K-Wertbereichen aus von 13-19 bzw. 26-35, entsprechend mittleren Molekulargewichten von etwa 10.000 und etwa 67.000;
(b) alkylierte Polyvinylpyrrolidone;
(c) Vinylpyrrolidon-Vinylacetat-Copolymere;
(d) Vinylpyrrolidon-Dimethylaminoethymethacrylat-Copolymere;
(e) Vinylpyrrolidon-Methacrylamidopropyltrimethylammoniumchlorid-Copolymere;
(f) Vinylpyrrolidon-Vinylcaprolactam-Dimethylaminoethy1 methacrylat-Terpolymere;
(g) Vinylpyrrolidon-Styrol-Copolymere; oder
(h) Vinylpyrrolidon-Acrylsäure-Copolymere.

Im Rahmen der vorliegenden Erfindung ist die Verwendung wasserlöslicher Polymere bevorzugt. Besonders bevorzugt wird die Verwendung von Polyvinylpyrrolidon (PVP) und Polyvinylalkohol (PVA), sowie Mischungen verschiedener Qualitäten (Molekulargewichte) und Copolymerisate dieser Polymere. Geeignete Comonomere sind z.B. N-Vinylimidazol, Vinylacetat und Vinylcaprolactam. Die adsorbierenden organischen Chemikalien können der Reaktion in Form einer Lösung oder direkt als Feststoff zugesetzt werden. Als Lösungsmittel für die Chemikalien eignet sich u.a. das bei der Reaktion eingesetzte Polyol, also bevorzugt Ethylenglykol und/oder Glycerin. Die Zugabe kann auf einmal, portionsweise oder kontinuierlich über einen längeren Zeitraum erfolgen. Die Zugabe kann vor oder beim Erhitzen des Polyols bzw. erst bei erreichter Reaktionstemperatur erfolgen. Die Konzentration der adsorbierenden Chemikalien in der Reaktionsmischung muss an die Silbersalzzugabe angepasst werden. Zur Anpassung der Konzentration der adsorbierenden Chemikalien wird bei der entsprechenden Zielkonzentration an Silbersalz eine Versuchsreihe mit unterschiedlichen Konzentrationen der adsorbierenden Chemikalien (z.B. zwischen 0,05 Gew.-% und 5 Gew.-%) durchgeführt und die Morphologie (Länge und Durchmesser) sowie die Ausbeute an Silber Nanodrähten bestimmt. Nach Auswertung der Versuche ist der optimale Konzentrationsbereich grob eingegrenzt. Mittels einer zweiten Versuchsreihe, in der die Konzentrationen in einem engeren Bereich variiert werden, kann die Konzentration der adsorbierenden Chemikalien noch genauer auf die gewünschte Morphologie und eine hohe Ausbeute optimiert werden. Aus den Versuchen wurde der bevorzugte Konzentrationsbereich der adsorbierenden Chemikalie mit mindestens 0,05 Gew.-% bestimmt. Besonders bevorzugt beträgt die Konzentration mindestens 0,2 Gew.-%, insbesondere bevorzugt bei mindestens 0,5 Gew.-% und ganz besonders bevorzugt bei mindestens 1,0 Gew.-% in der Reaktionsmischung.

Zur Erzeugung von Silber-Nanodrähten nach dem erfindungsgemäßen Verfahren ist das Vorhandensein von Halogenidionen zwingend erforderlich. Die Halogenidionen können schon als unvermeidlicher Spurenbestandteil in den anderen zugegebenen Chemikalien, insbesondere im Lösungsmittel und in der auf Metalloberflächen adsorbierenden organischen Chemikalie vorhanden sein oder separat zur Reaktionsmischung zugegeben werden. In der wissenschaftlichen Literatur und in der US 2009/0282948 A1 sowie in der WO 2009/128973 A2 wird die Anwesenheit von Spuren an Halogeniden (insbesondere F-, Cl⁻, Br, I⁻) als wesentlich zur Bildung der Silber-Nanodrähte beschrieben.

Untersuchungen der Erfinder haben gezeigt, dass neben den genannten Halogeniden auch Anionen aus der Gruppe der Pseudohalogenide (insbesondere SCN⁻; CN⁻, OCN⁻, CNO⁻) eingesetzt werden können. Die zur Erzielung hoher Ausbeuten und günstiger Aspektverhältnisse (Länge der Nanodrähte / Durchmesser der Nanodrähte) erforderlichen Konzentrationen der Halogenide/Pseudohalogenide müssen an die jeweilige Rezeptur und die Reaktionsbedingungen angepasst werden. Mittels Versuchsreihen mit variierenden Konzentrationen an Halogeniden und/oder Pseudohalogeniden unter sonst konstanten Reaktionsbedingungen können die Einflüsse auf Ausbeute und Morphologie untersucht werden. Aus den Versuchen wurde der bevorzugte Konzentrationsbereich der Halogenid-/Pseudohalogenidionenkonzentration zu 5 ppm bis 2000 ppm bestimmt. Besonders bevorzugt liegt die Konzentration im Bereich von 20 ppm bis 1000 ppm und insbesondere bevorzugt im Bereich von 50 ppm bis 500 ppm in der Reaktionsmischung. Bevorzugte Chemikalien zur Einstellung der erforderlichen Halogenid-/Pseudohalogenidionenkonzentration sind die entsprechenden Ammonium- bzw. Alkalimetallsalze oder die entsprechenden Säuren. Besonders bevorzugt ist der Einsatz von NaCl, NaSCN, KCl und KSCN.

Zusätzlich oder alternativ zu den genannten Salzen können die Halogenidionen mittels anderer Halogenidionen freisetzender Substanzen zugegeben werden. Insbesondere bevorzugte Substanzen sind die elementaren Halogene und die Halogene in höheren Oxidationsstufen. Besonders bevorzugte Substanzen sind NaClO, NaClO₃ und KClO₃ jeweils als Feststoff oder in Lösung. Unter den Reaktionsbedingungen bilden sich aus diesen Substanzen zumindest teilweise die entsprechenden Halogenidionen.

Die Herstellung von Silber-Nanodrähten nach dem erfindungsgemäßen Verfahren erfordert den Zusatz einer ein Redoxpaar ausbildenden Chemikalie, ausgewählt aus der Gruppe Br⁻/Br₂/BrO3⁻, I⁻/I₂/IO3⁻, oder V(0)/V(II)/V(III)/V(IV)/V(V). Dem Stand der Technik bekannt ist der Zusatz von Fe(II)/Fe(III) zur Erzeugung von Silber-Nanodrähten. Die Rolle von Eisen wird in der Literatur unterschiedlich diskutiert. In der US 2009/0282948 A1 wird Fe(II) die Aufgabe zugeschrieben, an die Metalloberfläche adsorbierten molekularen Sauerstoff zu oxidieren. Das dabei entstehende Fe(III) wird durch das Lösungs-/Reduktionsmittel wieder zu Fe(II) reduziert. Durch die Reaktionsbedingungen, insbesondere durch das im Überschuss vorhandene Reduktionsmittel wird das Redoxpaar automatisch wieder in die reduzierte Form überführt. Insofern ist die chemische Form in der die Zugabe des Redoxpaares erfolgt belanglos. Unter den vorherrschenden Reaktionsbedingungen entsteht die reduzierte Form des Redoxpaares aus der "Redoxpaar erzeugenden Chemikalie". In Fall von Eisen kann die Zugabe von Fe(II) oder Fe(III) ohne Einfluss auf den Syntheseerfolg stattfinden.

Untersuchungen der Erfinder haben gezeigt, dass der Ersatz von Eisen durch die oben genannten Redoxpaare-ausbildenden Chemikalien zumindest gleiche, meist höhere Ausbeuten an Silber-Nanodrähten ermöglicht. Im Sinne der Erfindung geeignete Redoxpaar-ausbildende Chemikalien stellen Brom, lod und/oder Vanadium bereit. Unter den Reaktionsbedingungen werden aus den zugesetzten Chemikalien die zur Teilnahme an der Silber-Nanodraht Synthese erforderlichen Species gebildet. Im Fall des Metalls Vanadium kann der Zusatz in Form des gediegenen Metalls oder der entsprechenden Salze erfolgen. Durch Einsatz der Halogenide von Vanadium kann die Dosierung der für die Reaktion erforderlichen Halogenidmenge kombiniert mit der Redoxpaar Dosierung erfolgen. Um die Zugaben unabhängig voneinander zu machen, wird die Dosierung anderer Salze des Metalls, wie z.B. der Oxide, Hydroxide, Sulfate oder der Nitrate bevorzugt.

Überaschenderweise wurde gefunden, dass die Halogene Brom und lod die Rolle des Redoxpaares in der Reaktion übernehmen können. Brom und lod können in elementarer Form, als Bromid bzw. lodid oder Bromat bzw. lodat zur Reaktion zugegeben werden. Besonders bevorzugt wird zusätzlich zu lod ein weiteres Halogenid/Pseudohalogenid eingesetzt, wodurch besonders hohe Ausbeuten erzielt werden. Iod wird bevorzugt in Form von KI zugesetzt. Brom wird bevorzugt in Form von KBr zugesetzt. Ebenso wie beim Zusatz von Halogeniden/Pseudohalogeniden ist eine sorgfältige Abstimmung der Konzentration an Redoxpaar-bildenden Chemikalien auf die jeweilige Rezeptur und die Reaktionsbedingungen erforderlich. Mittels Versuchsreihen mit variierenden Konzentrationen an Redoxpaar-bildenden Chemikalien unter sonst konstanten Reaktionsbedingungen können die zum Teil dramatischen Einflüsse auf Ausbeute und Morphologie der Silber-Nanodrähte untersucht werden. Aus den Versuchen wurde der bevorzugte Konzentrationsbereich der Redoxpaar-bildenden Chemikalien zu 5 ppm bis 2000 ppm bestimmt. Besonders bevorzugt liegt die Konzentration im Bereich von 20 ppm bis 1000 ppm und am insbesondere bevorzugt im Bereich von 50 ppm bis 500 ppm in der Reaktionsmischung.

Bei der Reduktion von Silbersalzen mit Polyolen wird mit jedem reduzierten Silberatom ein Proton freigesetzt. Nach dem Prinzip von Le Chatelier kann durch Zusatz von Lauge oder Säure die Reaktionsgeschwindigkeit beeinflusst werden. Die Entstehung der Silber-Nanodrähte verläuft in Konkurrenz mit der Bildung anderer geordneter Strukturen und irregulärer Silberkörper. Bei zu hohen Reaktionsgeschwindigkeiten erhöht sich der Anteil an irregulären Körpern. Durch Säurezusatz kann die Reaktionsgeschwindigkeit auf ein zur Bildung von Silber-Nanodrähten geeignetes Maß angepasst werden. Prinzipiell eignen sich viele anorganische und auch organische Säuren zur Zugabe in den erfindungsgemäßen Verfahren. Bevorzugt eingesetzt werden Halogenwasserstoffsäuren, insbesondere HCl, HBr und HI sowie Salpetersäure. Der Zusatz der Säure ist auf die jeweilige Rezeptur und die Reaktionsbedingungen abzustimmen. Mittels Versuchsreihen mit variierender Säurezugabe unter sonst konstanten Reaktionsbedingungen können bevorzugte Säure-Konzentrationsbereiche bestimmt werden. Aus den Versuchen wurde der bevorzugte Konzentrationsbereich der Säure zu 0,01 Gew.-% bis 2,0 Gew.-%, besonders bevorzugt zu 0,02 Gew.-% bis 1,0 Gew.-% und insbesondere bevorzugt zu 0,05 Gew.-% bis 0,5 Gew.-% in der Reaktionsmischung bestimmt.

Die genauen Reaktionsbedingungen der erfindungsgemäßen Verfahren sind in weiten Teilen variabel.

Die Verfahren werden bei erhöhten Temperaturen von über 100°C durchgeführt. Die Untersuchungen der Erfinder haben ergeben, dass die Ausführung der erfindungsgemäßen Verfahren bei Temperaturen über 145°C deutlich höhere Ausbeuten an Silber-Nanodrähten ergeben, als bei Reaktionstemperaturen unter 145°C erzielt werden. Bevorzugt werden die erfindungsgemäßen Verfahren bei Temperaturen zwischen 145°C und 200°C, weiter bevorzugt zwischen 150°C und 180°C, besonders bevorzugt zwischen 155°C und 170°C durchgeführt.

Die Reihenfolge der Zugabe der meisten Chemikalien ist beliebig. Wie bereits dargestellt, können die Halogenid-/Pseudohalogenidzusätze, die Redoxpaar bildenden Zusätze und die auf der Metalloberfläche adsorbierenden Zusätze direkt zum kalten Polyol, während der Erwärmungsphase oder zum heißen Polyol erfolgen. Analoges gilt für einen eventuell erforderlichen Säurezusatz. Der Silbersalzzusatz erfolgt vorteilhafterweise erst bei Reaktionstemperatur. Silbersalz und adsorbierende Chemikalien können gleichzeitig, unmittelbar nacheinander, abwechselnd portionsweise oder gleichzeitig über einen längeren Zeitraum erfolgen.

Die Bildung der Silber-Nanodrähte kann bei Durchführung des erfindungsgemäßen Verfahrens visuell gut verfolgt werden. Am Ende der Reaktion liegt eine perlmutfarbene, schillernde Dispersion vor. Die während der Reaktion auftretende Gasentwicklung kommt zum Erliegen. Nach Beendigung der Reaktion lässt man die Reaktionsmischung unter Rühren erkalten. Zur Abtrennung der Silber-Nanodrähte kann die Dispersion mit einem geeigneten Lösungsmittel verdünnt werden. Nach Verdünnung sedimentieren die Silber-Nanodrähte. Geeignete Lösungsmittel sind beispielsweise Alkohole wie EtOH und Isopropanol oder auch Wasser. Die abdekantierten Silber-Nanodrähte können zur weiteren Verarbeitung in Polymere eingeknetet, extrudiert oder eingerührt werden.

Die nach einem der oben angegebenen Verfahren hergestellten Silber-Nanodrähte weisen bevorzugt eine Länge von 1 µm bis 200 µm, einen Durchmesser von 50 nm bis 1300 nm und ein Aspektverhältnis (Länge/Durchmesser) von mindestens 5 auf.

Die nach den erfindungsgemäßen Verfahren hergestellten Silber-Nanodrähte können für zahlreiche Applikationen verwendet werden. Besonders vorteilhaft werden die Silber-Nanodrähte dort eingesetzt, wo ihre einzigartigen physikalischen, biologischen und chemischen, insbesondere die elektrischen, elektronischen, wärmeleitenden, mechanischen, optischen, antimikrobiellen und katalytischen Eigenschaften vorteilhaft genutzt werden können.

Ein bevorzugtes Einsatzgebiet für die Silber-Nanodrähte ist der Bereich elektrisch leitfähiger Schichten oder Materialien. Hier können die sich aus der Anisotropie der Partikel ergebenden Effekte wie z.B. niedrige Perkolationsgrenze und hohe Leitfähigkeit bei geringem Füllgrad vorteilhaft genutzt werden. Lack- bzw. Polymerschichten mit einem Füllgrad ab etwa 1 Vol.-% der erfindungsgemäßen Silber-Nanodrähte zeigen bereits die elektrische Leitfähigkeit eines metallischen Leiters. Leitfähigkeit bei derart geringen Füllgraden geht häufig einher mit hoher optischer Transparenz der Materialien und kaum veränderten mechanischen Eigenschaften der Trägersysteme. Weitere Einsatzgebiete finden sich daher in den Bereichen touch panels, antistatik Behandlung von Displays, elektromagnetische Abschirmung, Elektroden für organische und anorganische Elektrolumineszenz Displays, allgemein Elektroden für flexible Displays, Elektroden und Leiterbahnen für Photovoltaikanlagen, allgemein Antistatikfilme, e-paper, LCD Displays, allgemein transparente leitfähige Filme, druckbares wiring auf Platinen und flexiblen Substraten, Mehrschicht wiring, Herstellung und Reparatur elektronischer Bauteile und Schaltkreise, druckbare bzw. extrudierbare Antennen insbesondere für RFID Systeme und Leiterbahnen, bonding, Niedertemperatursinterkontakte, leitfähige Klebstoffe, insbesondere leitfähige Heißkleber. Insbesondere vorteilhaft ist die Verwendung der Silber-Nanodrähte in elektrisch leitfähigen, drucktechnisch applizierbaren Systemen wie z.B. Tinten und Pasten ggf. in der Mischung mit anderen leitfähigen Materialien wie z.B. Silbermikro- und/oder Silbernanopartikeln und/oder leitfähigen Kohlenstoffspecies (Carbon Nanotubes, Ruß, Fullerene, Graphen, Kohlefaser, ...). Derartige Systeme können u.a. im Bereich gedruckter Leiterbahnen, zum Anschluss von Dünnschichtsystemen oder zur Herstellung druckbarer elektronischer Komponenten wie z.B. Kondensatoren oder Transistoren verwendet werden.

Die gute elektrische Leitfähigkeit Silber-Nanodraht haltiger Systeme ermöglicht deren Verwendung im Bereich elektrischer Heizung. Insbesondere optisch weitgehend transparente, mechanisch beständige, Interferenzmuster-freie, heizbare Schichten sind seit langem von technischem Interesse. Zur Herstellung derartiger leitfähiger Polymere kommen im Prinzip alle synthetischen und natürlichen Polymere, Thermoplaste und Duroplaste sowie Dispersionen in Frage. Insbesondere geeignet sind Silber-Nanodraht-gefüllte thermoplastische, synthetische Polymere. Die Polymere stammen bevorzugt aus der Gruppe der Polyolefine (bevorzugt Polyethylen (PE), Polypropylen (PP)), Acrylnitril-Butadien-Styrol (ABS), aus der Gruppe der Polyamide (PA), Polylactat (PLA), Polymethylmethacrylat (PMMA), Polycarbonat (PC), aus der Gruppe der Polyester (z.B. Polyethylenterephthalat (PET)), Polystyrol (PS), Polyetherketon (PEEK) und Polyvinylchlorid (PVC). Ebenfalls besonders geeignet zur Herstellung heizbarer Schichten sind Silber-Nanodraht-gefüllte Synthesefasern. Insbesondere bevorzugt sind dabei Fasern aus Polyamid, Polyester bzw. aus Polypropylen. Des weiteren sind besonders geeignet zur Herstellung heizbarer Systeme Silber-Nanodraht gefüllte Folien. Insbesondere bevorzugt sind Folien aus PET. Andere hervorragend geeignete Systeme zur Herstellung heizbarer und ggf. hoch transparenter Schichten sind mit Silber-Nanodrähten rezeptierte Monomer- Lösungen, wie z.B. Monoalkylacrylate bzw. Lösungen niedermolekularer Polymere, wie z.B. Polyglykole, Polyalkohole, Polyketone aber auch technische Lackharze.

Weitere bevorzugte Einsatzgebiete für die erfindungsgemäß hergestellten Silber-Nanodrähte finden sich in der Herstellung elektrisch leitfähiger Fasern. Dabei können die Fasern aus thermoplastischen Polymeren, entsprechend der obigen Liste an Thermoplasten bestehen oder aber auch Naturfasern sein, wie Cellulose, Viskose, Baumwolle, Seide etc. Ebenso können die elektrisch leitfähigen Fasern auch über Elektrospinnverfahren hergestellt sein, die damit aus löslichen amorphen und kristallbildenden Polymeren, wie Polyurethane, Co-Polyester, Polyethylenoxid, Polyvinylalkohol, Polyacrylnitril, Polyimid, etc. Die elektrisch leitfähigen Fasern finden dann Verwendung in textiltechnisch verarbeitbaren Heiz-, Sensorik- und Datenübertragungsanwendungen.

Weitere bevorzugte Einsatzgebiete für die erfindungsgemäß hergestellten Silber-Nanodrähte liegen im Bereich der Papierherstellung. So können die erfindungsgemäßen Silber-Nanodrähte sowohl als Füllstoff in der Papierpulpe, als Additiv in Papierstreichfarben, bzw. als nachträgliche Bedruckung oder nachträglich, chemisch oder physikalisch abgeschiedene Beschichtung eingesetzt werden.

Weitere bevorzugte Einsatzgebiete für die erfindungsgemäß hergestellten Silber-Nanodrähte finden sich u.a. in den Bereichen Wärmeleitung, Wärmeleitpasten, Temperaturleitkleber, gerichteten Wärmeleitfähigkeit, hoch wärmeleitfähige Bereiche in high power LED und Transistoren und in Thermogeneratoren.

Die antimikrobielle Wirkung von Silber, insbesondere nanopartikulären metallischen Silbers ist sowohl Gegenstand aktueller Forschung als auch industrieller Produktion. Die nach den erfindungsgemäßen Verfahren hergestellten Silber-Nanodrähte können ab einer gewissen Schwellenkonzentration entsprechend ausgerüsteten Gegenständen antimikrobielle Eigenschaften verleihen.

Aufgrund des an der Grenzfläche von Metallen auftretenden Plasmoneffektes eignen sich Metall- und insbesondere Silbernanopartikel zum Einsatz bei der Surface Plasmon Resonance Analytik (SPR Analytik) bzw. bei der Surface Enhanced Raman Spectroscopy (SERS). Aufgrund ihrer geometrischen Anisotropie lassen sich Silber-Nanodrähte sowohl einzeln, als auch als array zur SPR Analytik und zur SERS bzw. ganz allgemein im Bereich der Photonik einsetzen.

Die erfindungsgemäßen Silber-Nanodrähte können außerdem in optischen Filtern eingesetzt werden.

### Wege zur Ausführung der Erfindung

Zur Illustration der Erfindung und zur Verdeutlichung ihrer Vorzüge werden nachfolgend Ausführungsbeispiele angegeben. Diese Ausführungsbeispiele sollen im Zusammenhang mit der Zeichnung näher erläutert werden. Es versteht sich von selbst, dass diese Angaben die Erfindung nicht beschränken sollen.

Im Rahmen der dargestellten Beispiele werden folgende Chemikalien verwendet:
- Ethylenglykol, zur Synthese, Carl Roth GmbH&Co.KG, Karlsruhe, Deutschland
- AgNO₃, p.a., Merck KGaA, Darmstadt, Deutschland
- PVP, Luvitec K30, Basf SE, Ludwigshafen, Deutschland
- NaCl, p.a. Carl Roth GmbH&Co.KG, Karlsruhe, Deutschland
- KI, p.a., Merck KGaA, Darmstadt, Deutschland
- CuSO₄*5H₂O, p.a., Merck KGaA, Darmstadt, Deutschland
- NaBr, p.a., Merck KGaA, Darmstadt, Deutschland
- KSCN, p.a., Merck KGaA, Darmstadt, Deutschland
- HNO₃, 65 %, Baker analyzed, J.T. Baker, Deventer, Holland
- 1-Methoxy-2-Propanol, Friedrich Scharr KG, Stuttgart, Deutschland
- Ethanol, Carl Roth GmbH&Co.KG, Karlsruhe, Deutschland
- Ethylacetat, Carl Roth GmbH&Co.KG, Karlsruhe, Deutschland
- Cellulosenitrat, ethanolisch, Dow Wolff Cellulosics GmbH, Bomlitz, Deutschland

### Beispiel 1:

30,0 g Ethylenglykol werden in einem Rundkolben im Ölbad auf 170°C erhitzt. Unter Rühren werden 2,5 g Luvitec K30, 6 mg NaCl und 6 mg KI gelöst. Es werden 120 µl HNO₃ zugegeben. Im Anschluss werden unter Rühren 2,80 g AgNO₃ zur heißen Reaktionsmischung gegeben. Nach etwa 6 min ist die Reaktion abgeschlossen. Nach dem Erkalten wird die Reaktionsmischung in 150 ml entionisiertes Wasser gegeben. Am Folgetag wird der Überstand abdekantiert und getrocknet. Der getrocknete Rückstand wird mittels REM auf seine Morphologie untersucht. Er besteht praktisch ausschließlich aus Silber-Nanodrähten mit einer Länge zwischen 3 µm und 35 µm und einem Durchmesser zwischen 150 nm und 500 nm. Eine typische REM Aufnahme der erhaltenen Silber-Nanodrähte ist in Figur 1 wiedergegeben. Die Ausbeute an Silber-Nanodrähten beträgt 95 % der eingesetzten Silbermenge.

### Beispiel 2:

Die Versuchsführung erfolgt analog zu der in Beispiel 1 beschriebenen. Abweichend von Beispiel 1 beträgt die Reaktionstemperatur 155°C. Die Reaktion ist nach etwa 15 min abgeschlossen. Die gebildeten Silber-Nanodrähte zeigen eine Länge von 3 µm bis 60 µm und einen Durchmesser von 150 nm bis 500 nm. Die Ausbeute an Silber-Nanodrähten beträgt 90 % der eingesetzten Silbermenge.

### Beispiel 3:

Die Versuchsführung erfolgt analog zu der in Beispiel 1 beschriebenen. Abweichend von Beispiel 1 beträgt die Reaktionstemperatur 130°C. Die Reaktion ist nach etwa 120 min abgeschlossen. Die gebildeten Silber-Nanodrähte zeigen eine Länge von 3 µm bis 200 µm und einen Durchmesser von 150 nm bis 500 nm. Die neben den Silber-Nanodrähten entstandenen groben sphärischen Silberpartikel können nicht mittels Sedimentation von den Nanodrähten abgetrennt werden. Die Ausbeute an Silber-Nanodrähten wird unter Einbeziehung der in den REM Aufnahmen nachgewiesenen Silberpartikel aus der Auswaage abgeschätzt. Die Ausbeute an Silber-Nanodrähten beträgt etwa 25 % der eingesetzten Silbermenge.

Die Auswertung der in den Beispielen 1 bis 3 angegebenen Versuche zeigt, dass Silber-Nanodrähte unter Zusatz von Chlorid und lodid bei Temperaturen von 155°C und 170°C mit Ausbeuten von mindestens 90 % herstellbar sind. Bei Temperaturen von 130°C sinkt die Ausbeute dramatisch auf ca. 25 %. Bei niedrigen Temperaturen entstehen teilweise längere Nanodrähte. Durch Anpassung der Verfahrensführung können bei höheren Temperaturen ebenfalls längere Stäbe bei zugleich hoher Ausbeute erhalten werden. Bei zweistufiger Zugabe des Silbersalzes bei 170°C Reaktionstemperatur können Silber-Nanodrähte mit einer Länge von 4 µm bis 110 µm und einem unveränderten Durchmesser von 150 nm bis 500 nm erhalten werden. Untersuchungen zur Optimierung der Chlorid- und lodidkonzentration unter den dargestellten Versuchsbedingungen haben gezeigt, dass das Ausbeuteoptimum im Bereich der in Beispiel 1 angegebenen Konzentrationen liegt. Sowohl höhere, als auch niedrigere Konzentrationen an Chlorid und lodid führen zu reduzierten Ausbeuten an Silber-Nanodrähten.

### Beispiel 4:

30,0 g Ethylenglykol werden in einem Rundkolben im Ölbad auf 170°C erhitzt. Unter Rühren werden 2,5 g Luvitec K30, 6 mg VCl₃ gelöst. Es werden 120 µl HNO₃ zugegeben. Im Anschluss werden unter Rühren 2,80 g AgNO₃ zur heißen Reaktionsmischung gegeben. Nach etwa 6 min ist die Reaktion abgeschlossen. Nach dem Erkalten wird die Reaktionsmischung in 150 ml entionisiertes Wasser gegeben. Am Folgetag wird der Überstand abdekantiert und getrocknet. Der getrocknete Rückstand wird mittels REM auf seine Morphologie untersucht. Er besteht praktisch ausschließlich aus Silber-Nanodrähten mit einer Länge zwischen 3 µm und 35 µm und einem Durchmesser zwischen 150 nm und 500 nm. Die Ausbeute an Silber-Nanodrähten beträgt 80 % der eingesetzten Silbermenge.

Aus dem in Beispiel 4 angegebenem Versuch lässt sich ableiten, dass Vanadium ebenfalls als Redoxpaar bildendes Element in den erfindungsgemäßen Verfahren eingesetzt werden kann.

### Beispiel 5:

Die Versuchsführung erfolgt analog zu der in Beispiel 1 beschriebenen: Abweichend von Beispiel 1 werden nur 6 mg NaCl und keine Redoxpaar bildende Chemikalie (KI in Beispiel 1) zugegeben. Die Reaktion ist nach etwa 6 min abgeschlossen. Die gebildeten Silber-Nanodrähte zeigen eine Länge von 1 µm bis 15 µm und einen Durchmesser von 150 nm bis 500 nm. Die neben den Silber-Nanodrähten entstandenen groben sphärischen Silberpartikel können nicht mittels Sedimentation von den Nanodrähten abgetrennt werden. Die Ausbeute an Silber-Nanodrähten wird unter Einbeziehung der in den REM Aufnahmen nachgewiesenen Silberpartikel aus der Auswaage abgeschätzt. Die Ausbeute an Silber-Nanodrähten beträgt etwa 50 % der eingesetzten Silbermenge.

Die Auswertung des Versuches aus Beispiel 5 zeigt, dass der Zusatz von Chlorid alleine zu deutlich reduzierten Ausbeuten an Silber-Nanodrähten führt. Weitere Versuche mit höheren und niedrigeren Chlorid Konzentrationen ergeben noch geringere Ausbeuten an Silber-Nanodrähten unter den angegebenen Versuchsbedingungen.

### Beispiel 6:

Die Versuchsführung erfolgt analog zu der in Beispiel 4 beschriebenen. Abweichend von Beispiel 4 wird anstatt NaCl eine Menge von 8 mg KSCN zugesetzt. Die Reaktion ist nach etwa 6 min abgeschlossen. Die gebildeten Silber-Nanodrähte zeigen eine Länge von 1 µm bis 25 µm und einen Durchmesser von 500 nm bis 1300 nm. Die Ausbeute an Silber-Nanodrähten beträgt 85 % der eingesetzten Silbermenge.

Gemäß Beispiel 6 kann der Chloridzusatz durch Thiocyanat mit geringen Einbußen in der Ausbeute ersetzt werden. Auffallend ist, dass bei Zusatz von Thiocyanat im Vergleich zu einem Halogenidzusatz wesentlich dickere Drähte entstehen.

### Beispiel 7:

30,0 g Ethylenglykol werden in einem Rundkolben im Ölbad auf 170°C erhitzt. Unter Rühren werden 2,5 g Luvitec K30, 6 mg NaCl und 6 mg KI gelöst. Es werden 120 µl HNO₃ zugegeben. Im Anschluss werden unter Rühren 2,80 g AgNO₃ zur heißen Reaktionsmischung gegeben. Nach etwa 10 min werden weitere 1,4 g AgNO₃ zur heißen Reaktionsmischung gegeben. Nach weiteren 10 min werden nochmals 1,4 g AgNO₃ zur heißen Reaktionsmischung gegeben. Nach weiteren 10 min werden nochmals 1,4 g AgNO₃ zur heißen Reaktionsmischung gegeben. Nach etwa 45 min ist die Reaktion abgeschlossen. Nach dem Erkalten wird die Reaktionsmischung in 150 ml entionisiertes Wasser gegeben. Am Folgetag wird der Überstand abdekantiert und getrocknet. Der getrocknete Rückstand wird mittels REM auf seine Morphologie untersucht. Er besteht praktisch ausschließlich aus Silber-Nanodrähten mit einer Länge zwischen 3 µm und 35 µm und einem Durchmesser zwischen 150 nm und 500 nm. Die Ausbeute an Silber-Nanodrähten beträgt 95 % der eingesetzten Silbermenge.

Durch das in Bsp. 7 beschriebene Vorgehen der stufenweisen Zugabe von Silbersalz sind sehr hohe Konzentrationen an Silber-Nanodrähten in der Reaktionslösung erreichbar. Diese Vorgehensweise ermöglicht eine besonders wirtschaftliche Produktion.

### Beispiel 8:

Es werden Silber-Nanodrähte gemäß Beispiel 1 hergestellt. Abweichend von Beispiel 1 werden der Nanodraht Dispersion nach der Synthese nicht 150 ml Wasser, sondern 150 ml Ethanol zugegeben. Nach dem Absetzen der Drähte wird der Überstand abdekantiert und verworfen. Der Bodensatz wird nochmals mit 150 ml Ethanol aufgerührt und zur Sedimentation stehen lassen. Nach dem Absetzen der Drähte wird der Überstand verworfen. An einem Teil des homogen gerührten, feuchten Rückstandes wird das Trockengewicht des Rückstandes zu 70 Gew.-% bestimmt. 1,0 g dieser ethanolischen Silber-Nanodrahtdispersion werden zu 14 g einer Lackbasis aus 63 Gew.-% 1-Methoxy-2-Propanol, 16 Gew.-% Ethanol, 11 Gew.-Ethylacetat und 11 Gew.-% Cellulosenitrat gegeben und bis zur Homogenität gerührt. Der erhaltene Lack wird mit einem Glasstab auf einen Glasträger mit 30 mm Breite aufgezogen. Die getrocknete Lackschicht zeigt einen Flächenwiderstand von 50 Ohm. Der trockene Lack enthält ca. 31 Gew.-% Silber-Nanodrähte, was etwa 4,1 Vol-% Silber entspricht.

## Patentansprüche

1. Verfahren zur Herstellung von Silber-Nanodrähten umfassend die Schritte
a) Bereitstellung einer Reaktionsmischung umfassend
ein Polyol,
eine auf einer Silberoberfläche adsorbierende organische Chemikalie,
eine ein Halogenid und/oder eine ein Pseudohalogenid bildende Chemikalie, wobei es sich bei der ein Halogenid bildenden Chemikalie um ein Salz des Halogenids Cl⁻ handelt und wobei es sich bei der ein Pseudohalogenid bildende Chemikalie um ein Salz eines der Pseudohalogenide SCN⁻, CN⁻, OCN⁻ und/oder CNO⁻ handelt,
eine ein Redoxpaar ausbildende Chemikalie ausgewählt aus der Gruppe bestehend aus Brom, Iod, Vanadium und deren Gemischen,
b) Zugabe eines Silbersalzes in einer Menge, dass die Konzentration an Silber in der Reaktionsmischung zumindest 0,5 Gew.-% bezogen auf das Gesamtgewicht der Reaktionsmischung beträgt, wobei die Zugabe des Silbersalzes bei einer Temperatur der Reaktionsmischung von zumindest 100°C erfolgt,
c) Beibehalten einer Temperatur der Reaktionsmischung von zumindest 100°C für die Dauer der Reaktion.

2. Verfahren nach Anspruch 1, wobei die Zugabe des Silbersalzes in einer Menge erfolgt, dass die Konzentration an Silber in der Reaktionsmischung zumindest 1,0 Gew.-%, bevorzugt zumindest 2,5 Gew.-%, besonders bevorzugt zumindest 5,0 Gew.-% bezogen auf das Gesamtgewicht der Reaktionsmischung beträgt.

3. Verfahren nach Anspruch 1 oder 2, wobei die das Halogenid und/oder die das Pseudohalogenid bildende Chemikalie in einer Menge in der Reaktionsmischung enthalten ist, dass die Konzentration des Halogenids und/oder des Pseudohalogenids in der Reaktionsmischung in einem Bereich von 5 ppm bis 2000 ppm, bevorzugt in einem Bereich von 20 ppm bis 1000 ppm, besonders bevorzugt in einem Bereich von 50 ppm bis 500 ppm liegt.

4. Verfahren nach einem der Ansprüche 1 bis 3, wobei es sich bei der das Halogenid bildenden Chemikalie um NaCl und/oder KCl handelt.

5. Verfahren nach einem der Ansprüche 1 bis 4, wobei es sich bei der das Pseudohalogenid bildenden Chemikalie um NaSCN und/oder KSCN handelt.

6. Verfahren nach einem der Ansprüche 1 bis 5, wobei die in Schritt a) bereitgestellte Reaktionsmischung zusätzlich ein Eisensalz enthält, wobei das Eisensalz ein Fe(II)/Fe(III) - Redoxpaar ausbildet.

7. Verfahren nach einem der Ansprüche 1 bis 6, wobei die in Schritt a) bereitgestellte Reaktionsmischung zusätzlich ein Kupfersalz enthält, wobei das Kupfersalz ein Redoxpaar ausbildet.

8. Verfahren nach einem der Ansprüche 1 bis 7, wobei es sich bei der ein Redoxpaar ausbildenden Chemikalie um elementares Vanadium, ein Vanadiumoxid, ein Vanadiumhydroxid, ein Vanadiumsulfat, ein Vanadiumnitrat, ein Vanadiumchlorid oder um ein Gemisch dieser Verbindungen handelt.

9. Verfahren nach Anspruch 8, wobei es sich bei dem Redoxpaar um Br⁻/Br₂/BrO₃⁻, I⁻/I₂/IO₃⁻ und/oder V(0)/V(II)/V(III)/V(IV)/V(V) handelt.

10. Verfahren nach einem der Ansprüche 1 bis 9, wobei die Konzentration der ein Redoxpaar ausbildenden Chemikalie in der Reaktionsmischung in einem Bereich von 5 ppm bis 2000 ppm, bevorzugt in einem Bereich von 20 ppm bis 1000 ppm, besonders bevorzugt in einem Bereich von 50 ppm bis 500 ppm liegt.

11. Verfahren nach einem der Ansprüche 1 bis 10, wobei die in Schritt a) bereitgestellte Reaktionsmischung zusätzlich zumindest eine anorganische oder organische Säure enthält.

12. Verfahren nach Anspruch 11, wobei es sich bei der Säure um HCl, HBr, HI und/oder HNO₃ handelt.

13. Verfahren nach Anspruch 11 oder 12, wobei die Zugabe der Säure in einer Menge erfolgt, dass die Konzentration an Säure in der Reaktionsmischung in einem Bereich von 0,01 Gew.-% bis 2,0 Gew.-%, bevorzugt in einem Bereich von 0,02 Gew.-% bis 1,0 Gew.-%, besonders bevorzugt in einem Bereich von 0,05 Gew.-% bis 0,5 Gew.-% bezogen auf das Gesamtgewicht der Reaktionsmischung beträgt.

14. Verfahren nach einem der Ansprüche 1 bis 13, wobei die Zugabe des Silbersalzes bei einer Temperatur der Reaktionsmischung von zumindest 145°C, bevorzugt bei einer Temperatur der Reaktionsmischung zwischen 145°C und 200°C, besonders bevorzugt bei einer Temperatur der Reaktionsmischung zwischen 150°C und 180°C, insbesondere bevorzugt bei einer Temperatur der Reaktionsmischung zwischen 155°C und 170°C erfolgt.

15. Verfahren nach einem der Ansprüche 1 bis 14, wobei in Schritt c) für die Dauer der Reaktion eine Temperatur der Reaktionsmischung von zumindest 145°C, bevorzugt eine Temperatur der Reaktionsmischung zwischen 145°C und 200°C, besonders bevorzugt eine Temperatur der Reaktionsmischung zwischen 150°C und 180°C, insbesondere bevorzugt eine Temperatur der Reaktionsmischung zwischen 155°C und 170°C beibehalten wird.

16. Verfahren nach einem der Ansprüche 1 bis 15, wobei nach Schritt c) der Schritt d) Isolieren der Silber-Nanodrähte aus der Reaktionsmischung durchgeführt wird, wobei zum Isolieren der Silber-Nanodrähte aus der Reaktionsmischung bevorzugt ein geeignetes Lösungsmittel zugegeben wird und anschließend ein Abdekantieren des Überstandes erfolgt.

17. Verfahren nach Anspruch 16, wobei nach Schritt c) und vor Schritt d) der Schritt c₁) Abkühlen der Reaktionsmischung
durchgeführt wird, wobei bevorzugt ein Abkühlen der Reaktionsmischung auf Raumtemperatur erfolgt.

## Claims

1. A process for producing silver nanowires, comprising the steps
a) providing a reaction mixture, comprising
a polyol,
an organic chemical that adsorbs on a silver surface,
a chemical forming a halide and/or a pseudohalide, wherein the halide-forming chemical is a salt of the halide Cl⁻ and wherein the pseudohalide-forming chemical is a salt of one of the pseudohalides SCN⁻, CN⁻, OCN⁻ and/or CNO⁻,
a chemical that forms a redox pair selected from the group consisting of bromine, iodine, vanadium and mixtures thereof,
b) adding a silver salt in an amount, such that the concentration of silver in the reaction mixture amounts to at least 0.5% by weight, based on the total weight of the reaction mixture, wherein the silver salt is added at a temperature of the reaction mixture of at least 100°C,
c) keeping the temperature of the reaction mixture at least 100°C for the duration of the reaction.

2. The process according to claim 1, wherein the silver salt is added in an amount such that the concentration of silver in the reaction mixture amounts to at least 1.0% by weight, preferably at least 2.5% by weight, especially preferably at least 5.0% by weight based on the total weight of the reaction mixture.

3. The process according to claim 1 or 2, wherein the chemical forming the halide and/or the pseudohalide in the reaction mixture is present in an amount such that the concentration of the halide and/or of the pseudohalide in the reaction mixture is in a range of 5 ppm to 2000 ppm, preferably in a range of 20 pm to 1000 ppm, especially preferably in a range of 50 ppm to 500 ppm.

4. The process according to any one of claims 1 to 3, wherein the chemical forming the halide is NaCl and/or KCl.

5. The process according to any one of claims 1 to 4, wherein the chemical forming the pseudohalide is NaSCN and/or KSCN.

6. The process according to any one of claims 1 to 5, wherein the reaction mixture provided in step a) additionally contains an iron salt, wherein the iron salt forms a Fe(II)/Fe(III) - redox pair.

7. The process according to any one of claims 1 to 6, wherein the reaction mixture provided in step a) additionally contains a copper salt wherein the copper salt forms a redox pair.

8. The process according to any one of claims 1 to 7, wherein the chemical forming a redox pair is elemental vanadium, a vanadium oxide, a vanadium hydroxide, a vanadium sulfate, a vanadium nitrate, a vanadium chloride or a mixture of these compounds.

9. The process according to claim 8, wherein the redox pair is Br⁻/Br₂/BrO₃⁻, I⁻/I₂/IO₃⁻ and/or V(0)/V(II)/V(III)/V(IV)/V(V).

10. The process according to any one of claims 1 to 9, wherein the concentration of the chemical forming a redox pair in the reaction mixture is in a range of 5 ppm to 2000 ppm, preferably in a range of 20 ppm to 1000 ppm, especially preferably in a range of 50 ppm to 500 ppm.

11. The process according to any one of claims 1 to 10, wherein the reaction mixture provided in step a) additionally contains at least one organic or inorganic acid.

12. The process according to claim 11, wherein the acid is HCl, HBr, HI and/or HNO₃.

13. The process according to claim 11 or 12, wherein the acid is added in an amount such that the concentration of acid in the reaction mixture is in a range of 0.01% by weight to 2.0% by weight, preferably in a range of 0.02% by weight to 1.0% by weight, especially preferably in a range of 0.05% by weight to 0.5% by weight, based on the total weight of the reaction mixture.

14. The process according to any one of claims 1 to 13, wherein the silver salt is added at a temperature of the reaction mixture of at least 145°C, preferably at a temperature of the reaction mixture between 145°C and 200°C, especially preferably at a temperature of the reaction mixture between 150°C and 180°C, in particular preferably at a temperature of the reaction mixture between 155°C and 170°C.

15. The process according to any one of claims 1 to 14, wherein in step c) a temperature of the reaction mixture of at least 145°C, preferably a temperature of the reaction mixture between 145°C and 200°C, especially preferably a temperature of the reaction mixture between 150°C and 180°C, in particular preferably a temperature of the reaction mixture between 155°C and 170°C is maintained for the duration of the reaction.

16. The process according to any one of claims 1 to 15, wherein after step c), step d) is carried out:
d) isolating the silver nanowires from the reaction mixture,
wherein for isolating the silver nanowires from the reaction mixture, preferably a suitable solvent is added and the supernatant is decanted subsequently.

17. The process according to claim 16, wherein after step c) and before step d), step c₁) is carried out:
c₁) cooling the reaction mixture,
wherein the reaction mixture is preferably cooled to room temperature.

## Revendications

1. Procédé de fabrication des nanofils d'argent, comprenant les étapes:
a) Mise à disposition d'un mélange réactionnel comprenant:
un polyol,
un produit chimique organique adsorbant sur une surface en argent,
un produit chimique formant un halogénure ou un pseudo-halogénure, le produit chimique formant un halogénure étant un sel de l'halogénure Cl⁻ et le produit chimique formant un pseudo-halogénure étant un sel des pseudo-halogénures SCN⁻ , CN⁻, OCN⁻ et/ou CNO⁻,
un produit chimique formant un couple redox, choisi dans le groupe comprenant le brome, l'iode, le vanadium et leurs mélanges,
b) Ajout d'un sel d'argent dans une quantité telle que la concentration d'argent dans le mélange réactionnel s'élève à au moins 0,5 % en poids, en rapport au poids total du mélange réactionnel, l'ajout du sel d'argent s'effectuant à une température du mélange réactionnel d'au moins 100°C,
c) Maintien d'une température du mélange réactionnel d'au moins 100°C pour la durée de la réaction.

2. Procédé selon la revendication 1, l'ajout du sel d'argent s'effectuant dans une quantité telle que la concentration d'argent dans le mélange réactionnel s'élève à au moins 1,0 % en poids, de préférence à au moins 2,5 % en poids, de manière particulièrement préférée à au moins 5,0 % en poids, en rapport au poids total du mélange réactionnel.

3. Procédé selon la revendication 1 ou 2, dans lequel le produit chimique formant l'halogénure et/ou le produit chimique formant le pseudo-halogénure est contenu dans le mélange réactionnel dans une quantité telle que la concentration de l'halogénure et/ou du pseudo-halogénure dans le mélange réactionnel se situe dans un ordre de 5 ppm à 2000 ppm, de préférence dans un ordre de 20 ppm à 1000 ppm, de manière particulièrement préférée dans un ordre de 50 ppm à 500 ppm.

4. Procédé selon l'une quelconque des revendications 1 à 3, le produit chimique formant l'halogénure étant du NaCl et/ou du KCl.

5. Procédé selon l'une quelconque des revendications 1 à 4, le produit chimique formant le pseudo-halogénure étant du NaSCN et/ou du KSCN.

6. Procédé selon l'une quelconque des revendications 1 à 5, dans lequel le mélange réactionnel mis à disposition dans l'étape a) contient en supplément un sel de fer, le sel de fer formant un couple redox Fe(II)/Fe(III).

7. Procédé selon l'une quelconque des revendications 1 à 6, dans lequel le mélange réactionnel mis à disposition dans l'étape a) contient en supplément un sel de cuivre, le sel de cuivre formant un couple redox.

8. Procédé selon l'une quelconque des revendications 1 à 7, le produit chimique formant un couple redox étant un vanadium élémentaire, un oxyde de vanadium, un hydroxyde de vanadium, un sulfate de vanadium, un nitrate de vanadium, un chlorure de vanadium ou un mélange desdits composés.

9. Procédé selon la revendication 8, le couple redox étant du Br⁻/Br₂/BrO₃⁻,I⁻/I₂/IO₃⁻ et/ou V(0)/V(II)/V(III)/V(IV)/V(V).

10. Procédé selon l'une quelconque des revendications 1 à 9, la concentration dans le mélange réactionnel du produit chimique formant un couple redox se situant dans un ordre de 5 ppm à 2000 ppm, de préférence dans un ordre de 20 ppm à 1000 ppm, de manière particulièrement préférée dans un ordre de 50 ppm à 500 ppm.

11. Procédé selon l'une quelconque des revendications 1 à 10, dans lequel le mélange réactionnel mis à disposition dans l'étape a) contient en supplément un acide anorganique ou organique.

12. Procédé selon la revendication 11, l'acide étant du HCl, du Hbr, du HI et/ou du HNO₃.

13. Procédé selon la revendication 11 ou 12, l'ajout de l'acide s'effectuant dans une quantité telle que la concentration d'acide dans le mélange réactionnel se situe dans un ordre de 0,01 % en poids à 2,0 % en poids, de préférence dans un ordre de 0,02 % en poids à 1,0 % en poids, de manière particulièrement préférée dans un ordre de 0,05 % en poids à 0,5 % en poids, en rapport au poids total du mélange réactionnel.

14. Procédé selon l'une quelconque des revendications 1 à 13, l'ajout du sel d'argent s'effectuant à une température du mélange réactionnel d'au moins 145 °C, de préférence à une température du mélange réactionnel comprise entre 145 °C et 200 °C, de manière particulièrement préférée, à une température du mélange réactionnel comprise entre 150 °C et 180 °C, de manière notamment préférée, à une température du mélange réactionnel comprise entre 155°C et 170 °C.

15. Procédé selon l'une quelconque des revendications 1 à 14, dans lequel dans l'étape c), pour la durée de la réaction, une température du mélange réactionnel d'au moins 145°C, de préférence une température du mélange réactionnel comprise entre 145 °C et 200°C, de manière particulièrement préférée, une température du mélange réactionnel comprise entre 150 °C et 180°C, de manière notamment préférée, une température du mélange réactionnel comprise entre 155°C et 170 °C reste maintenue.

16. Procédé selon l'une quelconque des revendications 1 à 15, dans lequel après l'étape c), l'étape:
d) isolation des nanofils d'argent hors du mélange réactionnel,
est effectuée pour isoler les nanofils d'argent hors du mélange réactionnel, un solvant adapté étant ajouté de préférence et ensuite, une décantation du surnageant étant effectuée.

17. Procédé selon la revendication 16, dans lequel après l'étape c) et avant l'étape d), l'étape:
c₁) refroidissement du mélange réactionnel,
est réalisée, un refroidissement du mélange réactionnel à la température ambiante s'effectuant de préférence.
